# EUROPEAN PATENT APPLICATION

(11) **EP 3 395 994 A1**
(43) Date of publication of application: **31.10.2018**
(21) Application number: 16879323.0
(22) Date of filing: 21.12.2016
(51) Int. Cl.: C22C 38/38, C22C 38/28, C22C 38/22, C22C 38/00, C22C 38/32, C22C 38/58, C22C 38/24, C22C 38/26, B21D 53/88, C21D 9/00

(54) **VEHICLE PART HAVING HIGH STRENGTH AND EXCELLENT DURABILITY, AND MANUFACTURING METHOD THEREFOR**

(30) Priority: 21.12.2015 KR 20150182971
(71) Applicant: Posco, Pohang-si, Gyeongsangbuk-do 37859 (KR)
(72) Inventor: CHO, Yeol-Rae, Gwangyang-si Jeollanam-do 57807 (KR); CHUNG, Youn-Il, Incheon 21985 (KR); SEONG, Hwan-Goo, Gwangyang-si Jeollanam-do 57807 (KR); PARK, Ki-Hyun, Gwangyang-si Jeollanam-do 57807 (KR)
(74) Representative: Zech, Stefan Markus
(86) International application number: PCT/KR2016/015003
(87) International publication number: WO 2017/111456

(57) **Abstract**

The present invention relates to a part for vehicle having high strength and excellent durability, and a manufacturing method therefor. According to one aspect of the present invention, the part for vehicle comprises, by a weight ratio, a composition comprising 0.20-0.50% of C, 0.5% or less of Si, 1.0-2.0% of Mn, 0.01-0.1% of Al, 0.010% or less of P, 0.003% or less of S, 0.01-0.1% of Ti, 0.05-0.5% of Cr, 0.05-0.3% of Mo, 0.01% or less of N, and the remainder being Fe and other inevitable impurities, and the part for vehicle can have, by an area ratio, a microstructure comprising 90% or more of tempered martensite, 4% or less of retained austenite, and the remainder being one type or both of two types selected from among the ferrite and bainite structures.

## Description

### [Technical Field]

The present disclosure relates to a part for vehicle having high strength and excellent durability, and a manufacturing method therefor.

### [Background Art]

As a solution to simultaneously solve both tasks of protection of passengers in a vehicle and environmental protection, there is a growing interest in improving the rigidity of vehicles to lighten vehicle bodies. For example, a stabilizer bar of a vehicle chassis, a tubular coupled torsion beam axle, and the like, are a part for supporting the weight of a vehicle body and continuously receiving fatigue load during driving, so such elements are required to simultaneously secure rigidity and endurance life.

Conventionally, a hot press forming method or a post-heat treatment method has been developed and applied to increase the strength of a steel sheet for a high strength part for vehicle. The hot press forming method is not necessarily limited. Regarding the hot press forming method, for example, although it is not necessarily limited, a hot-rolled or cold-rolled coil having a strength in a range of about 500 MPa to 800 MPa is heated to an austenite temperature range of, for example, Ac3 or higher, to be solution heat treated, and is extracted from a heating furnace. Then, forming and mold cooling (quenching) are simultaneously performing using a press provided with a cooling device. Since forming and cooling are simultaneously performed, a part, having been obtained, may have high strength, for example, a strength of 1500 MPa or more in some cases. Regarding the post-heat treatment method, a hot-rolled or cold-rolled coil is formed at room temperature and provided in the form of a part. Then, the coil is heated to an austenite temperature range of Ac3 or more to be solution heat treated, and rapid cooling (quenching) is performed. Through the method described above, a part having high strength may be manufactured.

However, if a steel sheet is manufactured by the methods described above, a microstructure in which martensite is a main structure may be formed in a steel sheet, so high strength may be obtained. However, in this case, due to vulnerability of a martensite structure, there may be a problem that the resistance to repeated load, that is, fatigue properties, may be poor. In detail, by surface decarburization occurring during a heat treating process or a surface scratch generated during part manufacturing, fatigue properties may be affected. In detail, as strength is increased, a degree of an effect of those factors may be increased.

To solve the problem described above, a method, where tempering heat treatment or the like is performed after a part is manufactured using a hot press forming or a post-heat treatment, has been developed. Thus, the fatigue properties and toughness of the part may be improved.

However, when heat treating is performed according to the process described above, not only is strength of a part reduced, but also, a degree of improvement of fatigue properties is insignificant, unlike the intention.

### [Disclosure]

### [Technical Problem]

An aspect of the present disclosure may provide a part having high strength and excellent fatigue properties by significantly improving durability while a reduction in strength is not significant.

Another aspect of the present disclosure may provide a method for manufacturing a part having high strength and excellent durability.

Another aspect of the present disclosure may provide a part having high strength and excellent durability without adding B as an essential element in order to improve strength, and a method for manufacturing the same.

The problem which the present disclosure may solve is not limited to the above. A man skilled in the art may understand additional problems which may be solved by the present disclosure from the overall description of the present disclouse.

### [Technical Solution]

According to an aspect of the present disclosure, a part for vehicle includes a composition including, by weight ratio, 0.20% to 0.50% of carbon (C), 0.5% or less of silicon (Si), 1.0% to 2.0% of manganese (Mn), 0.01% to 0.1% of aluminum (Al), 0.010% or less of phosphorus (P), 0.003% or less of sulfur (S), 0.01% to 0.1% of titanium (Ti), 0.05% to 0.5% of chromium (Cr), 0.05% to 0.3% of molybdenum (Mo), 0.01% or less of nitrogen (N), and a remainder of iron (Fe) and other inevitable impurities, and includes a microstructure including, by an area ratio, 90% or more of tempered martensite, 4% or less of retained austenite, and a remainder of one or both of two selected from among ferrite and bainite, wherein epsilon carbide is contained in the tempered martensite as a precipitate.

According to another aspect of the present disclosure, a method for manufacturing a part for vehicle includes: preparing a material having a composition including, by weight ratio, 0.20% to 0.50% of C, 0.5% or less of Si, 1.0% to 2.0% of Mn, 0.01% to 0.1% of Al, 0.010% or less of P, 0.003% or less of S, 0.01% to 0.1% of Ti, 0.05% to 0.5% of Cr, 0.05% to 0.3% of Mo, 0.01% or less of N, and a remainder of Fe and other inevitable impurities; heating the material to a temperature at which the material is transformed into austenite; obtaining an intermediate product by cooling while forming the material having been heated in a mold; and tempering the intermediate product at a temperature of 150°C to 250°C.

According to another aspect of the present disclosure, a method for manufacturing a part for vehicle includes: preparing a material having a composition including, by weight ratio, 0.20% to 0.50% of C, 0.5% or less of Si, 1.0% to 2.0% of Mn, 0.01% to 0.1% of Al, 0.010% or less of P, 0.003% or less of S, 0.01% to 0.1% of Ti, 0.05% to 0.5% of Cr, 0.05% to 0.3% of Mo, 0.01% or less of N, and a remainder of Fe and other inevitable impurities; cold forming the material; heating the material having been cold formed to a temperature at which the material is transformed into austenite; obtaining an intermediate product by cooling the material having been heated; and tempering the intermediate product at a temperature of 150°C to 250°C.

### [Advantageous Effects]

According to an exemplary embodiment in the present disclosure, an internal structure of a part is appropriately controlled, and the type of precipitate phase formed is limited. Thus, as a result, the yield strength and elongation, affecting durability of a part, are optimized, so a part having excellent durability while maintaining a high degree of strength may be provided.

### [Best Mode for Invention]

Hereinafter, the present disclosure will be described in detail.

A tempering heat treatment is widely used to improve the brittleness, and the like, of steel. Such a tempering heat treatment is generally performed at a temperature of 500°C to 550°C according to the related art. By the heat treatment, carbon, present as a solid solute in a martensite structure of a part (here, a martensite structure of a part is known as a fresh martensite structure to distinguish it from a tempered martensite structure to be described below. It is understood that a martensite structure refers to a fresh martensite structure unless otherwise specified in the present disclosure) is precipitated as cementite, thereby reducing brittleness of a martensite structure.

However, in this case, tensile strength of a part is significantly reduced, so it may be difficult to sufficiently obtain high strength. According to the research results of the present inventors, tensile strength may be lowered. For example, in the case of steel with tensile strength of 1500 MPa grade, tensile strength may be lowered by about 400 MPa. Moreover, in the case of steel material of 2200 MPa grade, tensile strength may be lowered by about 900 MPa, in some cases .

The inventors have conducted intensive researches thereon. As a result, it is confirmed that high strength and excellent fatigue properties can be secured simultaneously, when a composition of a part, a structure, and a type of a precipitate are optimized. Therefore, the inventors have led to the present disclosure.

### (Composition of Part)

First, a composition of a part according to the present disclosure will be described in detail. It should be noted that the content of each element in the present disclosure means weight% unless otherwise specified.

The part according to the present disclosure may have a composition including, by wt%, 0.20% to 0.50% of C, 0.5% or less of Si, 1.0% to 2.0% of Mn, 0.01% to 0.1% of Al, 0.010% or less of P, 0.003% or less of S, 0.01% to 0.1% of Ti, 0.05% to 0.5% of Cr, 0.05% to 0.3% of Mo, 0.01% or less of N, and a remainder of Fe and other inevitable impurities.

### Carbon (C): 0.20% to 0.50%

Carbon (C) is an important element for increasing the hardenability of a hot press formed steel sheet and for increasing the strength at the time of mold-cooling or post-heat treatment. To obtain strength of 1500 MPa or more after tempering treatment for improving fatigue strength, the content of C may be 0.20% or more. However, if the content of C exceeds 0.50%, in manufacturing process of a hot-rolled coil, a mechanical property deviation in width and length directions of a coil increases, so it may difficult to secure cold formability. Moreover, strength is significantly high after quenching heat treatment, so it may be sensitive to hydrogen delayed fracture. In addition, when welding is performed in a steel sheet manufacturing process or a heat-treated part manufacturing step, stress is concentrated around a weld zone, so fractures may be caused. Thus, an upper limit of the content of C is limited to 0.45%.

### Silicon (Si): 0.5% or less

Silicon (Si) is an important element determining a quality of weld zone or a surface quality. As an amount of Si added increases, the possibility of existence of oxide remaining in a weld zone increases. In this case, during flattening test (a test to evaluate performance of a weld zone by pressing a steel pipe after pipe making) or pipe expanding, performance may not be satisfied. Moreover, when the content of Si increases, as Si is concentrated on a surface of a steel sheet, the occurrence of a scale defect on a surface may be caused. Thus, in the present disclosure, it is necessary to strictly control the content of Si. For this reason, in the present disclosure, Si is required to be controlled to 0.5% or less. More strictly, Si is preferable to be controlled to less than 0.5%. In the present disclosure, Si is an impurity element, which is advantageous not to be added, so a lower limit of the content of Si is not required to be particularly defined. However, considering the load of a production process, the content of Si may be limited to 0.005% or more.

### Manganese (Mn): 1.0% to 2.0%

Together with Carbon (C), Manganese (Mn) is an important element which improves hardenability of a steel sheet for hot press forming with C, and affects the strength after mold-cooling or post-heat treatment. Simultaneously, in hot press forming or post-heat treatment, during air cooling after heating and before rapid cooling (quenching) is started, Mn has an effect delaying gereration of ferrite due to lowering of surface temperature of a steel sheet. For this reason, a lower limit of the content of Mn may be limited to 1.0%. On the other hand, if the content of Mn increases, bendability of a heat-treated part may be lowered though it may be advantageous to increase the strength or delay the transformation. Thus, an upper limit of Mn may be 2.0%.

### Aluminum (Al): 0.01% to 0.1%

Aluminum (Al) is a typical element used as a deoxidizer, and may be usually included in an amount of 0.01% or more in order to perform such a role. However, if the content of Al is excessive, Al reacts with N during a continuous casting process, so aluminum nitride (AlN) may be precipitated. Thus, occurrence of a surface defect or corner cracking may be caused. Moreover, when an electrical resistance welded (ERW) steel pipe is manufactured, an excessive amount of oxides may remain in a weld zone. Thus, the content of Al may be limited to 0.1% or less.

### Phosphorus (P): 0.01% or less

Phosphorus (P) is a type of impurity, an inevitably contained element. Moreover, P is an element which barely contributes to the improvement of the strength of a part after hot press forming or post-heat treatment. In addition, when P is segregated in a grain boundary in a heating step for solutionizing treatment of austenite, impact energy or fatigue properties may be degraded. Thus, in the present disclosure, the content of P is limited to 0.01% or less. In an embodiment according to the present disclosure, the content of P may be limited to 0.007% or less. As illustrated previously, in the present disclosure, P is an impurity element advantageous not to be added, so a lower limit of P may be limited to 0%.

### Sulfur (S): 0.003% or less

Sulfur (S), an impurity element in steel, is combined with Mn, and thus may form an elongated sulfide. In this case, S is an element deteriorating toughness of a part obtained after cooled in a mold (hot press formed) or post-heat treated. Thus, the content of S is preferably limited to 0.003% or less. In an embodiment according to the present disclosure, the content of S may be limited to 0.002% or less.

### Titanium (Ti): 0.01% to 0.1%

Titanium (Ti) has an effect of suppressing the growth of an austenite grain in a heating step of a hot press forming or post-heat treatment process by forming a titanium nitride (TiN), titanium carbide (TiC), or titanium molybdenum carbide (TiMoC) precipitate. Moreover, when boron (B) and nitrogen (N), present in steel, react with each other to form boron nitride (BN), the effective content of B dissolved in the steel, is lowered, so a quenchability is reduced. In this case, when Ti is added, and then reacts with N to form TiN. Therefore, N is exhausted, so the effective content of B may be increased. As a result, it may contribute to stably improving strength after a hot press forming or post-heat treatment process. For this reason, Ti may be included in an amount of 0.01% or more. When Ti is added in an amount of 0.1%, an effect of Ti may be sufficiently obtained. When the content of Ti is more than 0.1%, an effect of improving strength is insignificant. In an embodiment according to the present disclosure, Ti may be limited to 0.1% or less.

### Chromium (Cr): 0.05% to 0.5%

Chromium (Cr) is an important element for improving hardenability of a steel sheet for hot press forming and contributing to increase in strength after hot press forming or post-heat treatment. Moreover, Cr is an element for affecting a critical cooling rate to easily obtain a martensite structure in a rapid cooling process, and contributing to lower an A3 temperature in a hot press forming process. When the A3 temperature is lowered, ferrite transformation may be delayed. In the present disclosure, for this reason, Cr is added in an amount of 0.05% or less. However, if the content of Cr is excessive, weldability may be lowered. In an embodiment according to the present disclosure, the content of Cr may be limited to 0.5% or less.

### Molybdenum (Mo): 0.05% to 0.3%

Molybdenum (Mo) is an element for improving a quenchability of a steel sheet for hot press forming, and contributing to stabilization of the strength after quenching. Furthermore, Mo is an effective element for expanding an austenite temperature range to a lower temperature side in an annealing process in hot rolling and cold rolling, and a heating step in hot press forming or post-heat treatment, and alleviating P segregation in steel. Thus, in the present disclosure, Mo is added in an amount of 0.05% or more. However, if the content of Mo is excessive, it is uneconomical since an effect of increasing strength with respect to an addition amount is reduced although it may be advantageous to increase strength. Thus, in an embodiment according to the present disclosure, an upper limit of Mo may be limited to 0.3%.

### Nitrogen (N): 0.01% or less

Nitrogen (N) is a type of impurity, an inevitably contained element. N causes precipitation of AlN, or the like, during a continuous casting process, thereby promoting occurrence of a surface defect or corner cracking of a continuously cast strand. Moreover, N reacts with Ti to form a TiN precipitate. The precipitates act as an absorption site of diffusible hydrogen. Thus, the content of N is required to be significantly reduced. For this reason, in the present disclosure, the content of N may be limited to 0.01% or less.

In addition, in the part according to the present disclosure, to improve a quenchability, boron (B) may be further added in the range limited below. However, in the part according to the present disclosure, as described later, a structure and a precipitate may be controlled to an appropriate range. Therefore, addition of B is not essential, but the addition of B has the advantage that strength may be further stably secured.

### Boron (B): 0.0005% to 0.005%

Boron (B) is an element, significantly advantageous to increase hardenability (a quenchability) of a steel sheet for hot press forming. In detail, even when a significantly small amount of B is added, it may significantly contribute to an increase in strength during mold-cooling of hot press forming or post-heat treatment. Therefore, B may be further included in addition to the composition of the part according to the present disclosure described previously. However, as an addition amount of B increases, an effect of increasing a quenchability as compared to the addition amount is slowed down, and the occurrence of a defect in a corner portion in a continuous casting slab may be promoted. For this reason, in the present disclosure, the content of B may be limited to 0.0005% to 0.005%.

Moreover, the part according to the present disclosure may further include one or both of two selected from among Cu and Ni in a steel sheet in a content range detailed below.

### Copper (Cu): 0.05% to 0.5%

Copper (Cu) is an element contributing to the improvement of corrosion resistance of steel. Moreover, when a tempering treatment is performed in order to increase toughness after hot press forming or post-heat treatment, as supersaturated copper is precipitated as epsilon carbide, Cu may have an age hardening effect. For this reason, in the present disclosure, it is advantageous to add Cu in a content of 0.05% or more. If the content of Cu is excessive, a surface defect may be caused in a steel sheet manufacturing process. Moreover, in terms of corrosion resistance, it is uneconomical as compared to addition. Thus, an upper limit of Cu is limited to 0.5%.

### Nickel (Ni): 0.05% to 0.5%

Nickel (Ni) is advantageous for improving corrosion resistance. In addition, Ni is not only effective in improving the strength and toughness of a part after hot press forming or post-heat treatment, but also contributes to improving a quenchability. Moreover, Ni is effective to reduce sensitivity to hot shortening caused by addition of Cu. In addition, Ni has an effect of expanding an austenite temperature range to a lower temperature side, in an annealing process in hot rolling and cold rolling, and a heating step of a hot press forming process, and thus is effective in expanding variability of a process. Thus, in an embodiment according to the present disclosure, Ni may be added in an amount of 0.05% or more. However, when the content of Ni is excessive, it is not only difficult to expect an increase in effectiveness, but also is not economically advantageous. Thus, in an embodiment according to the present disclosure, the content of Ni may be limited to 0.5% or less.

In addition, the part according to the present disclosure may further include one or both of two selected from among Nb and V.

### Niobium (Nb): 0.01% to 0.07%

Niobium (Nb) is an element effective for grain refinement of steel. Nb not only inhibits the austenite grain growth in a heating process of hot rolling, but also increases an unrecrystallization temperature in a hot rolling step, so Nb significantly contributes to refine a final structure. The refined structure is effective in dispersing an impurity such as P by causing grain refinement in a subsequent hot press forming or post-heat treatment process. Thus, in an embodiment according to the present disclosure, Nb may be added in an amount of 0.01% or more. However, if an addition amount is 0.07% or more, it is not preferable since slab may be sensitive to cracking during continuous casting and the material anisotropy of a hot-rolled or cold-rolled steel sheet may be increased. Thus, an upper limit of the content of Nb may be limited to 0.07%.

### Vanadium (V): 0.05% to 0.3%

Vanadium (V) is an element effective for grain refinement of steel and prevention of hydrogen delayed fracture. In other words, V not only inhibits austenite grain growth in a heating process of hot rolling, but also increases an unrecrystallization temperature in a hot rolling step, so V contributes to the refinement of a final structure. The refined structure is effective in causing grain refinement in a subsequent hot forming process to disperse an impurity such as P. Moreover, when V is present as a precipitate in a heat treated structure, having been quenched, hydrogen in steel is trapped, so hydrogen delayed fracture may be suppressed. Thus, in an embodiment according to the present disclosure, V may be added in an amount of 0.05% or more. If an addition amount of V is 0.3% or more, slab may be sensitive to cracking during continuous casting. Thus, V may be limited to 0.3% or less.

An element other than the additive elements described above is substantially Fe. However, it should be noted that it does not imply excluding an impurity inevitably contained in a process for manufacturing a steel sheet. Those skilled in the art will understand that there is no difficulty in understanding the types and contents of inevitably contained impurities.

In addition, the inventors of the present disclosure have researched various factors in order to improve durability of a part for vehicle. As a result, it is known that it is important to suppress grain boundary segregation in an austenite solutionization step (a heating step of a hot press forming or post-heat treatment process). In other words, as explained previously, in the present disclosure, P is inevitably contained in steel since P which is inevitably contained in steel as explained previously, is precipitated at a grain boundary during an austenite solution heat treatment step to cuase fracturing of a grain boundary, it is necessary to suppress segregation of P at a grain boundary as much as possible. According to the study results of the inventors, Mo, contained in the steel, is particularly effective for suppressing grain boundary segregation of P. In order to obtain such effect, it is advantageous that Mo is added so as to satisfy the relationship of Mo/P>10. (Here, each of Mo and P indicates the content (weight%) of the corresponding element.) Therefore, in an embodiment according to the present disclosure, the relationship may be specified as Mo/P>10.

### (Controlling of Microstructure and Precipitate of Part)

In addition, the inventors of the present disclosure have found that, in order to secure the durability of a part, fatigue properties and elongation should be secured simultaneously. In other words, the inventors have carefully researched fatigue stress properties, added in a durability test subsequent to a manufacturing process of a heat-treated part for a vehicle. As a result, under the condition in which repetitive stress, exceeding yield strength, is applied, an elongation significantly affects durability. On the other hand, under the condition in which the repetitive stress, lower than the yield strength, is applied, it was found that yield strength dominates the durability life. Therefore, in the present disclosure, it is necessary to appropriately control the yield strength and the elongation. To this end, it is necessary not only to appropriately control a microstructure but also to control a type of precipitate formed in the part.

### Microstructure of Part

A part according to the present disclosure may have a microstructure, mainly including tempered martensite, in addition to the composition described above, and including other small amounts of bainite and ferrite. Hereinafter, a structure of steel according to the present disclosure will be described. A ratio of each structure indicates an area ratio.

### Tempered Martensite: 90% or more

In the present disclosure, as a main microstructure, not martensite but tempered martensite may be included. Tempered martensite is advantageous for improving the elongation of the steel and improving the durability. To obtain the effect described above, tempered martensite may be included in an area ratio of 90% or more (100% is included).

### Retained Austenite: 4% or less

Martensite is transformed from austenite. It is preferable to allow all amount of austenite to be transformed to martensite, so it is not preferable that an amount of retained austenite is large. Thus, in the present disclosure, a ratio is limited to 4% or less. In an embodiment, a ratio may be limited to 2% or less.

The remaining structure other than the structure described above may be one or both of two selected from among ferrite and bainite. Thereamong, ferrite may be included in an area ratio of less than 5%. Each structure will be briefly described below.

### Ferrite: less than 5%

In the present disclosure, a ferrite ratio of a part is less than 5%. A ferrite structure has a problem of reducing strength of a part, so it is necessary to control a ratio of a ferrite structure to less than 5%.

### Bainite and other impurity structure

In addition to the structure described above, bainite or another impurity structure may be included. Those impurity structures may weaken strength of a part, so the content thereof is preferably limited. In more detail, it may be limited to 10% or less in total with the ferrite and retained austenite.

The part according to the present disclosure, satisfying the condition described above, is an ultra high strength part, and may have ultra high strength, for example, 1500 MPa or more of tensile strength. The part according to the present disclosure is more advantageous as strength is higher, so an upper limit of strength is not particularly limited. However, in an embodiment, the part may have strength of about 1500 MPa to 2200 MPa.

### Precipitate Condition

In the present disclosure, in tempered martensite, epsilon carbide is precipitated as a main precipitate. When conventional high-temperature tempering is applied, a cementite based (Fe3C) precipitate is mainly precipitated. In the present disclosure, epsilon carbide is precipitated with an area ratio of 80% or more in tempered martensite, as compared to an area of total precipitate in tempered martensite. If cementite based precipitate is precipitated, tensile strength and yield strength of steel may be reduced. Moreover, a decrease of tensile strength is further reduced. Thus, problems in which strength is low, and even durability such as fatigue properties, and the like, is reduced, may be caused. However, in the present disclosure, when epsilon carbide precipitate is formed, decrease in tensile strength is significantly reduced, while yield strength is increased. Thus, it is effective in ensuring durability. In an embodiment according to the present disclosure, the epsilon carbide may occupy at a number ratio of 70% or more to a total precipitate.

### (Yield Ratio of Part)

In the part according to a present disclosure, a yield ratio may be 0.7 to 0.85. In other words, if a yield ratio is low, yield strength is insufficient. Thus, it is disadvantageous to improve fatigue properties. In this case, it is advantageous that a yield ratio of a part is 0.72 or more. However, if a yield ratio is higher, in the case of a part having a condition according to the present disclosure, a phenomenon, in which a yield ratio is increased due to increased yield strength, does not occur, but a phenomenon, in which a yield ratio is increased due to the increase of drop of tensile strength, occurs. Thus, a yield ratio is preferably controlled to 0.82 or less.

### (Method for Manufacturing Part)

Hereinafter, a method for manufacturing a part according to the present disclosure will be described.

The part according to the present disclosure may be manufactured by hot press forming or post-heat treatment after forming. The method for manufacturing a part according to the present disclosure is not limited to the following method, but a method according to an embodiment is proposed as follows.

The method for manufacturing a part according to the present disclosure may be a method for heating a material such as a steel sheet or a steel pipe, having the composition described above, and then cooling (quenching) the material having been heated in a mold with forming, or a method for cold forming a material first, and then heating and cooling (quenching) the material. In this case, a heating condition and a cooling condition in each method may be limited as follows .

### Heating Temperature: 850°C to 960°C

To obtain a final structure of a part as tempered martensite of 90% or more, it is necessary to heat a material to a temperature at which the material is completely transformed into austenite. To this end, in an embodiment according to the present disclosure, the heating temperature may be 850°C or more. However, if a heating temperature is excessive, an austenite grain is coarsened. Thus, when a grain of a part is coarsened, so segregation of P, or the like, may be excessive. Here, a heating temperature may be 960°C or less.

### Holding Time at Heating Temperature: 100 sec to 1000 sec

It is advantageous to maintain at least 100 seconds or more in order to allow sufficiently transformation into the austenite at the heating temperature. However, if the holding time is significantly long, a grain may be coarsened and the energy costs required for heating is also increased, so that the holding time may be set to 1000 seconds or less according to an embodiment of the present disclosure.

### Cooling Rate : Critical Cooling Rate for Martensite or More

Since a martensite structure (a fresh martensite structure) should be formed by cooling, a cooling rate is required to be a critical cooling rate, at which at least martensite is produced, or more. The critical cooling rate is affected by a composition of a part, and there may be no difficulty in that the critical cooling rate of a part of a specific composition is obtained using a simple test by those skilled in the art. As a cooling rate is higher, it is more advantageous for formation of a martensite structure. Thus, there is no need to set an upper limit of a cooling rate. However, even if a cooling rate is continuously increased, an effect of increasing strength is not significant. Moreover, the cooling rate may be set to 300°C/sec or less in consideration of an actual cooling rate such as cooling capacity of cooling equipment.

### Cooling Stop Temperature: 100°C or less

It is advantageous that a cooling stop temperature is set to 100°C or less in order to allow sufficiently transformation into martensite. A lower limit of the cooling stop temperature is not particularly limited, but it may be set to a temperature of a refrigerant used or a room temperature.

The part, obtained by such a cooling process, may have a microstructure including 90% or more of martensite, less than 5% of ferrite, and 4% or less of retained austenite, by an area ratio. However, the microstructure is not a microstructure of a final part but a microstructure of an intermediate product. In the present disclosure, additional tempering treatment is performed on the intermediate product, so a part having both strength and durability may be provided.

Tempering Treatment: Maintaining at 150°C to 250°C for 10 minutes or more

In the present disclosure, a tempering heat treatment temperature is limited to 250°C or less. Here, during tempering treatment, as carbon, dissolved in martensite, is precipitated, carbide is formed. If a tempering treatment temperature is high, a structure, for example, carbide such as cementite, or sorbite is formed. Thus, yield strength and tensile strength are simultaneously reduced. Moreover, thereamong, the tensile strength is significantly reduced. Therefore, a part having high strength and excellent durability may not be obtained. In the present disclosure, the tempering treatment temperature is limited to 250°C or less, so epsilon carbide-based precipitate may be formed. Therefore, while a decrease in tensile strength may be significantly reduced, high yield strength and elongation may be obtained, so excellent durability may be secured. However, in order to obtain the effect of tempering treatment described above, the tempering treatment temperature may be 150°C or more.

In this case, in order to obtain an effect of sufficient tempering treatment, the tempering treatment time may be 10 minutes or more. There is no need to set an upper limit of the tempering treatment time. However, even when the tempering treatment time is longer, it is difficult to expect a further increase in an effect, and energy costs are also increased. Thus, the tempering treatment time may be set to 60 minutes or less.

### (Method for Manufacturing Material)

Hereinafter, an exemplary method for manufacturing a material to be processed into a part by hot press forming or post-heat treatment will be described. The material according to the present disclosure may be manufactured by hot rolling or additional cold rolling after hot rolling, and each process is as follows. It should be noted, however, that a method for manufacturing a steel sheet described below is merely an example, and is not necessarily limited thereto.

### Hot Rolling

### Heating Steel Slab to 1150°C to 1300°C

A steel slab having the composition described above is required to be heated to a temperature range from 1150°C to 1300°C. In other words, in order to dissolve segregation in a slab to uniformize a composition and to allow a slab to have workability suitable for rolling, it is advantageous in that the heating temperature is 1150°C or more. However, if a slab heating temperature is excessive, energy costs may be increased, a grain may be coarse, dissolution on a surface of a slab may occur, or oxide scale may be excessively generated. Thus, the slab heating temperature may be limited to 1300°C or less.

### Hot Finish Rolling at Temperature of Ar3 or More

When hot rolling is performed in a region in which ferrite is formed, deformation resistance becomes non-uniform, so passing ability is degraded. Moreover, when stress is concentrated on ferrite, possibility of strip breakage increases. Thus, hot finish rolling is required to be performed at a temperature of Ar3 or more, at which a ferrite phase is not allowed to be formed. However, if a temperature is excessive, a surface defect such as sand-type scale, or the like, may occur. In an embodiment, the hot finish rolling temperature may be limited to 950°C or less.

### Coiling at 600°C to 700°C

After hot rolling, cooling and Coiling are performed in a run out table. In this case, in order to reduce a mechanical property deviation in a width direction of a hot-rolled steel sheet and to improve passing ability of a subsequent cold-rolled steel sheet, it is preferable to control a coiling temperature not to include a low temperature structure such as martensite in a steel sheet. In other words, in order to manufacture a steel sheet according to the present disclosure, it is preferable to perform coiling at a temperature of 600°C to 700°C. If the coiling temperature is less than 600°C, a low temperature structure such as martensite is formed in an edge portion of a hot-rolled coil, so a problem, in which strength of a hot-rolled steel sheet is significantly increased, may occur. Specifically, when super cooling is performed in a width direction of a coil, a mechanical property deviation is increased. In this case, in a succeeding cold rolling process, passing ability is reduced, and it is difficult to control a thickness. Moreover, in an embodiment according to the present disclosure, if C, a reinforcing element, is included in an amount of more than 0.45%, thus strength of a steel sheet before heat treatment, having been obtained, is significant, so cold forming may be difficult to be performed. In this case, the coiling temperature is allowed to be 630°C or more, so strength of a steel sheet may be controlled to be 800 MPa or less. On the other hand, if the coiling temperature exceeds 700°C, internal oxidation may be caused on a surface of a steel sheet. If the internal oxide is removed by a pickling process, a gap may be formed, so oblateness of a steel pipe in a final part may be degraded. Thus, an upper limit is limited.

The steel sheet may be used for hot press forming or post-heat treatment as it is, but a steel sheet may be slitted to an appropriate size and an ERW steel pipe may be manufactured and used for hot press forming or post-heat treatment.

As described previously, in the present disclosure, a material such as a steel sheet or a steel pipe, having been hot-rolled, or the like, may be directly put into a hot press forming or a post-heat treatment process. However, in some cases, the steel sheet, having been hot rolled, may be additionally cold rolled and used. Hereinafter, additional processes will be described in detail.

In the present disclosure, a surface of a hot-rolled steel sheet manufactured by hot rolling is pickled and removed, and then cold rolling is performed. The steel sheet (a full hard material), having been cold rolled, is annealed and over aged to obtain a cold-rolled steel sheet. In this case, in an annealing process, an annealing temperature is in a range of 750 to 850. If the annealing temperature is less than 750°C, recrystallization may not be sufficient. If the annealing temperature exceeds 850°C, a grain may be coarsened, and a basic unit of annealing heating may be increased. Due to the problem described above, the annealing temperature is limited. Subsequently, an overaging temperature in an overaging zone is controlled in a range of 400°C to 600°C, so a final structure may be provided as a structure in which some of pearlite or bainite is included in a ferrite base. Here, with respect to strength of a cold-rolled steel sheet, in a manner similar to a hot-rolled steel sheet, tensile strength of 800 MPa or less may be obtained.

The steel sheet may be used for hot press forming or post-heat treatment as it is, but a steel sheet may be slitted to an appropriate size and an ERW steel pipe may be manufactured and used for hot press forming or post-heat treatment.

### [Mode for Invention]

Hereinafter, the present disclosure will be described more specifically by way of examples. It should be noted, however, that the following examples are intended to illustrate the present disclosure in more detail and not to limit the scope of the present disclosure. The scope of the present disclosure is defined by the matters set forth in the claims and those reasonably inferred from the claims.

### (Example)

### Example 1

Hot rolling was performed using a steel slab having a composition illustrated in Table 1. In Table 1, an element marked as * is only illustrated in ppm unit, and the remaining elements are illustrated in weight% (the same is applied to the remaining tables).

**[Table 1]**

| Classification | C | Si | Mn | P* | S* | Al | Ti | Cr | B* | Mo | Nb | V | Cu | Ni | N* | Mo/P |
|---|---|---|---|---|---|---|---|---|---|---|---|---|---|---|---|---|
| Inventive Steel 1 | 0.35 | 0.15 | 1.3 | 71 | 27 | 0.02 9 | 0.02 9 | 0.16 | 20 | 0.14 | - | - | - | - | 45 | 19.7 |

During hot rolling, the steel slab having the composition, described above, was uniformized by heating the steel slab in a range of 1200±20°C for 180 minutes. Then, after rough rolling, hot rolling was completed with a target of a range of 880±20°C subsequently. Then, coiling was performed at a temperature of 650±15°C, and a hot-rolled steel sheet having a thickness of 3.0mm was manufactured. The hot-rolled steel sheet was pickled, and heated at a temperature of 930±10°C for 6 minutes (360 seconds). Then, rapid cooling was performed to allow a temperature of the steel sheet to be equal to 30°C or less by immersing the steel sheet in a cooling water tank, maintained at 20°C to 30°C, at a cooling rate of 60°C/sec to 80°C/sec, higher than a martensite critical cooling rate. Then, tempering heat treatment was performed for 30 minutes at the temperature illustrated in Table 2, and a part was manufactured. In order to manufacture the part, forming at a high temperature or in a cold state before heating is included. The forming process does not have any particular effect on a change of mechanical properties of the part. Thus, it is common to test mechanical properties of a part, obtained by simulating a hot press forming or post-heat treatment process, with omitting forming process. Regarding the part, having been obtained, a tensile test and low cycle fatigue life were evaluated. The tensile test was conducted using a JIS5 specimen, and a low cycle fatigue test was conducted under the strain rate control conditions of R=-1 and Δ/2=±0.5%, with a specimen in which a length of an parallel portion is 15±0.01mm and a width of an parallel portion is 12.5±0.01mm. The results of the test described above are shown in Table 2. In Table 2, YS indicates yield strength, TS indicates tensile strength, EL indicates elongation, U-EL indicates uniform elongation, and T-El indicates total elongation. In Table 2, for example, 1-2 refers to Second Example of Inventive Steel 1. Moreover, PO, indicating the type of product, means that a steel sheet, on which hot rolling and pickling were performed, was targeted.

**[Table 2]**

| No | Type | Thickness (mm) | Coiling Temperature (°C) | Physical Properties of Material | | | Tempering Temperature (°C) | Physical Properties of Part | | | | YS× U-El (MPa%) | Low Cycle Fatigue Life (Cycle) | Note |
|---|---|---|---|---|---|---|---|---|---|---|---|---|---|---|
| | | | | YS (Mpa) | TS (Mpa) | T-E l (%) | | YS (Mpa) | TS (Mpa) | U-El (%) | T-El (%) | | | |
| 1-1 | PO | 3.0 | 650 | 428 | 620 | 22 | - | 1250 | 1960 | 4.7 | 9 | 5875 | 4006 | Comparative Example |
| 1-2 | PO | 3.0 | 650 | 428 | 620 | 22 | 160 | 1360 | 1850 | 5.2 | 9.6 | 7022 | 6237 | Inventive Example |
| 1-3 | PO | 3.0 | 650 | 428 | 620 | 22 | 220 | 1460 | 1800 | 5.2 | 10.1 | 7592 | 6445 | Inventive Example |
| 1-4 | PO | 3.0 | 650 | 428 | 620 | 22 | 250 | 1470 | 1730 | 4.1 | 10.1 | 6027 | 5780 | Inventive Example |
| 1-5 | PO | 3.0 | 650 | 428 | 620 | 22 | 330 | 1370 | 1500 | 3.3 | 9 | 4521 | 3300 | Comparative Example |
| 1-6 | PO | 3.0 | 650 | 428 | 620 | 22 | 500 | 1040 | 1100 | 4.7 | 9 | 4888 | 3580 | Comparative Example |
| 1-7 | PO | 3.0 | 650 | 428 | 620 | 22 | 550 | 960 | 1050 | 6.2 | 12 | 5952 | 4950 | Comparative Example |

As shown in Table 2, when a tempering temperature increased after quenching, tensile strength was continuously decreased, while yield strength was increased immediately after the quenching, was maximum at around 250°C of a tempering temperature, and was then continuously decreased as in the same manner as the tensile strength. The uniform elongation has a maximum value at around 220°C, was decreased rapidly, has a minimum value at 330°C, and was then gradually increased again. As the yield strength×uniform elongation balance is compared to the change in tensile properties, the balance tends to decrease rapidly from 250°C as a boundary. This result is almost identical to a change in a low cycle fatigue life. On the contrary, as the fatigue lives at 150°C tempering and quenching states are compared, the fatigue life in the case of 150°C tempering heat treatment is better as compared to that in the case of the as-quenched state.

Through the above example, when tempering temperature exceeded 250°C after quenching, the uniform elongation and the total elongation were decreased, and the yield strength x uniform elongation value was also decreased, which was consistent with a low cycle fatigue life. Thus, when tempering heat treatment after quenching is performed in a temperature range of 150°C to 250°C, as compared to conventional conditions of tempering heat treatment, such as 500°C to 550°C, more excellent fatigue properties may be obtained.

Table 3 shows the results of examining a structure of a part obtained by each manufacturing method.

**[Table 3]**

| Classification | Microstructure(area%) | | | |
|---|---|---|---|---|
| | Tempered Martensite | Ferrite | Retained austenite | Bainite |
| 1-1 | 93.1 | 1.0 | 2.7 | 3.2 |
| 1-2 | 95.3 | 2.6 | 2.1 | 0 |
| 1-3 | 92.0 | 2.4 | 2.0 | 3.6 |
| 1-4 | 96.0 | 0 | 2.0 | 2.0 |
| 1-5 | 93.4 | 1.5 | 1.9 | 3.2 |
| 1-6 | 96.0 | 1.0 | 2.2 | 0.8 |
| 1-7 | 94.7 | 3.3 | 0 | 2.0 |

As described previously, microstructures of Inventive Example and Comparative Example satisfy the conditions according to the present disclosure. However, as a result of examining the precipitate formed inside, in the case of Inventive Example, manufactured in conditions according to the present disclosure, 90% or more of a precipitate in a number ratio is present as epsilon carbide. However, in the case of Comparative Example, it was confirmed that most of the formed precipitate were cementite and did not satisfy conditions of precipitate according to the present disclosure. The difference in the precipitate affects significant difference in yield strength, tensile strength, and elongation behavior. As a result, the difference in the precipitate is determined to also affect a low cycle fatigue life.

### Example 2

Hot rolling was performed using a steel slab having a composition of Inventive Steel 2 and 3 illustrated in Table 4, and pickling was performed. Here, Inventive Steel 2 corresponds to steel having tensile strength of 1500 MPa grade after tempering, while Inventive Steel 3 corresponds to steel having tensile strength of 2000 MPa grad after tempering.

**[Table 4]**

| Classification | C | Si | Mn | P* | S* | Al | Ti | Cr | B* | Mo | Nb | V | Cu | Ni | N* | Mo/P |
|---|---|---|---|---|---|---|---|---|---|---|---|---|---|---|---|---|
| Inventive Steel 2 | 0.25 | 0.15 | 1.2 5 | 58 | 12 | 0.03 | 0.03 3 | 0.4 | 22 | 0.1 | - | - | - | - | 50 | 17.2 |
| Inventive Steel 3 | 0.42 | 0.15 | 1.3 | 67 | 11 | 0.03 5 | 0.04 | 0.1 | 10 | 0.11 | - | - | - | - | 42 | 16.4 |

Regarding Inventive Steel 2, during hot rolling, a slab having the composition, described above, was uniformized by heating the slab in a range of 1200±20°C for 180 minutes. Then, after rough rolling, hot rolling was finished with a target of a range of 890±20°C successively. Then, coiling was performed at a temperature illustrated in Table 5, and a hot-rolled steel sheet having a thickness of 3.0mm was manufactured. Moreover, pickling was performed to obtain a final hot-rolled steel sheet. Regarding Inventive Steel 3, after hot rolling and pickling in the same process as Inventive Steel 2, cold rolling was performed. Then, annealing was performed at a temperature of 800±10°C, and overaging was performed at a temperature of 430±10°C in an overaging zone, to obtain a cold-rolled steel sheet. In the case of Inventive Steel 2, the hot-rolled steel sheet, heating was performed at 930°C for 7 minutes. In the case of Inventive Steel 3, the cold-rolled steel sheet, heating was performed at 880°C for 6 minutes. Then, rapid cooling was performed to 20°C to 30°C at a cooling rate of 50°C/sec, higher than a martensite critical cooling rate. Then, tempering heat treatment was performed at the temperature illustrated in Table 2 for 30 minutes. A tensile test and a low cycle fatigue test were conducted on the steel sheet, having been heat treated. The tensile test was conducted using a JIS5 specimen, while a low cycle fatigue test was conducted under the strain rate control conditions of R=-1 and Δε/2=±0.5%, with a specimen in which a length of an parallel portion is 15±0.01mm and a width of an parallel portion is 12.5±0.01mm. The results of the test described above are shown in Table 5. In Table 5, YS indicates yield strength, TS indicates tensile strength, EL indicates elongation, U-EL indicates uniform elongation, and T-El indicates total elongation. Moreover, in Table 5, PO, indicating the type of product, means that a steel sheet, on which hot rolling and pickling were performed, was targeted, and CR means a steel sheet, on which cold rolling and annealing were performed. In Table 5, for example, 2-2 refers to Second Example of Inventive Steel 2.

As shown in Table 5, under conventional conditions of a tempering temperature, such as 500°C, a range of yield strength was 960 Mpa to 1180 Mpa, tensile strength was 1030 Mpa to 1290 Mpa, and a yield ratio was 0.91. When a tempering temperature is 250°C, it was confirmed that a range of yield strength was 1270 Mpa to 1630 Mpa, a range of tensile strength was 1605 Mpa to 1960 Mpa, and a yield ratio was 0.79 to 0.83. In other words, there is a significant difference in yield and tensile strength in a quenching state depending on the content of carbon. However, when a tempering temperature rises, the difference is significantly reduced. In this case, even when the content of carbon is changed, the difference in yield and tensile strength is not significant. Moreover, if tempering temperatures are 160°C and 220°C, yield ratios are about 0.73 and 0.81, respectively, which were evaluated to be controlled in within the range according to the present disclosure.

When comparing materials of Inventive Steel 2 after tempering, the yield strength×uniform elongation value and low cycle fatigue life were significantly changed at 250°C as a boundary. As compared with the case in which heat treating is performed at 330°C(2-3) and 550°C(2-4), in which a tempering temperature is 250°C or more, in the case of 2-1 and 2-2, to which low temperature tempering heat treatment is applied, the yield strength×uniform elongation value was more excellent, and the low cycle fatigue life was also more excellent.

Regarding Inventive Steel 3, similarly, the yield strength×uniform elongation value and low cycle fatigue life were significantly changed at 250°C as a boundary. As compared with the case in which heat treating is performed at 330°C (3-3) and 550°C(3-4), in which a tempering temperature is 250°C or more, in the case of 3-1 and 3-2, to which low temperature tempering heat treatment is applied, the yield strength×uniform elongation value was more excellent, and the low cycle fatigue life was also more excellent.

Meanwhile, in a tempering temperature range of 200°C to 250°C, when comparing the fatigue life of Inventive Steel 2 with the fatigue life of Inventive Steel 3, as the content of carbon is increased, yield strength and tensile strength were high. Moreover, in such a section, the yield strength×uniform elongation value was also increased. The result thereof is consistent with a result in which the low cycle fatigue properties are improved according to an increase in strength.

**[Table 5]**

| No | Type | Thickness (mm ) | Coiling Temperature (°C) | Physical Properties of Material | | | Tempering Temperature (°C) | Physical Properties of Part | | | | YS× U-El (MPa%) | Low Cycle Fatigue Life (Cycle) | Note |
|---|---|---|---|---|---|---|---|---|---|---|---|---|---|---|
| | | | | YS (Mpa) | TS (Mpa) | T-E l (%) | | YS (Mpa) | TS (Mpa) | U-El (%) | T-El (%) | | | |
| 2-1 | PO | 3.0 | 680 | 410 | 570 | 27 | 220 | 1190 | 1650 | 4.9 | 11.5 | 5831 | 6200 | Inventive Example |
| 2-2 | PO | 3.0 | " | " | " | " | 250 | 1270 | 1605 | 4.7 | 11.6 | 5969 | 6320 | Inventive Example |
| 2-3 | PO | 3.0 | " | " | " | " | 330 | 1295 | 1480 | 3.5 | 9.5 | 4533 | 3710 | Comparative Example |
| 2-4 | PO | 3.0 | " | " | " | " | 500 | 960 | 1030 | 4.3 | 12.7 | 4128 | 5100 | Comparative Example |
| 3-1 | CR | 2.0 | 680 | 510 | 740 | 18 | 200 | 1690 | 2100 | 5.1 | 7.5 | 8619 | 6990 | Inventive Example |
| 3-2 | CR | 2.0 | " | " | " | " | 250 | 1630 | 1960 | 4.3 | 6.6 | 7009 | 6167 | Inventive Example |
| 3-3 | CR | 2.0 | " | " | " | " | 330 | 1560 | 1805 | 3.66 | 6 | 5710 | 3906 | Comparative Example |
| 3-4 | CR | 2.0 | " | " | " | " | 500 | 1180 | 1290 | 4.7 | 8 | 5546 | 5308 | Comparative Example |

Table 6 shows the result of examining a structure of a part obtained by each manufacturing method.

**[Table 6]**

| Classification | Microstructure | | | |
|---|---|---|---|---|
| | Tempered Martensite | Ferrite | Retained austenite | Bainite |
| 2-1 | 91.0 | 3.8 | 1.6 | 3.6 |
| 2-2 | 92 | 3.4 | 1.1 | 3.5 |
| 2-3 | 92.5 | 3.3 | 1.3 | 2.9 |
| 2-4 | 90.5 | 3.0 | 1.7 | 4.8 |
| 3-1 | 94.1 | 0 | 3.3 | 2.6 |
| 3-2 | 95 | 1.0 | 3 | 1 |
| 3-3 | 94.2 | 0 | 3.9 | 1.9 |
| 3-4 | 93.6 | 1.0 | 3.6 | 1.8 |

As described previously, microstructures of Inventive Example and Comparative Example satisfy the conditions according to the present disclosure. However, as a result of analyzing the precipitate formed inside, in the case of Inventive Example, manufactured in conditions according to the present disclosure, 90% or more of a precipitate in a number ratio is present as epsilon carbide. However, in the case of Comparative Example, it was confirmed that most of the formed precipitate were cementite and did not satisfy conditions of precipitate according to the present disclosure. The difference in the precipitate affects significant difference in yield strength, tensile strength, and elongation behavior. As a result, the difference in the precipitate is determined to also affect a low cycle fatigue life.

### Example 3

Hot rolling was performed using a steel slab having a composition illustrated in Table 7, and pickling was performed.

**[Table 7]**

| Classification | C | Si | Mn | P* | S* | Al | Ti | Cr | B* | Mo | Nb | V | Cu | Ni | N* | Mo/P |
|---|---|---|---|---|---|---|---|---|---|---|---|---|---|---|---|---|
| Inventive Steel 4 | 0.35 | 0.15 | 1.3 | 71 | 27 | 0.029 | 0.029 | 0.16 | 20 | 0.14 | | | | | 45 | 19.7 |
| Inventive Steel 5 | 0.25 | 0.15 | 1.25 | 58 | 12 | 0.03 | 0.033 | 0.4 | 22 | 0.1 | | | | | 50 | 17.2 |
| Inventive Steel 6 | 0.42 | 0.15 | 1.3 | 67 | 11 | 0.035 | 0.04 | 0.1 | 10 | 0.11 | | | | | 42 | 16.4 |
| Comparative Steel 1 | 0.36 | 0.11 | 2.1 | 100 | 300 | 0.031 | 0.034 | 0.15 | 15 | 0.1 | | | | | 49 | 12.5 |
| Comparative Steel 2 | 0.35 | 0.1 | 1.3 | 140 | 29 | 0.034 | 0.032 | 0.16 | 20 | 0.1 | | | | | 43 | 7.1 |
| Comparative Steel 3 | 0.36 | 0.15 | 1.27 | 160 | 14 | 0.029 | 0.027 | 0.17 | 17 | 0.11 | | | | | 39 | 6.9 |
| Inventive Steel 7 | 0.34 | 0.2 | 1.8 | 69 | 27 | 0.03 | 0.03 | 0.11 | 16 | 0.15 | | | | | 38 | 21.7 |
| Comparative Steel 4 | 0.36 | 0.14 | 1.2 | 180 | 28 | 0.027 | 0.027 | 0.18 | 13 | 0.15 | | | | | 55 | 8.3 |
| Inventive Steel 8 | 0.37 | 0.11 | 1.3 | 96 | 22 | 0.029 | 0.029 | 0.2 | 15 | 0.15 | | | | | 60 | 15.6 |
| Comparative Steel 5 | 0.36 | 0.14 | 1.3 | 70 | 33 | 0.022 | 0.029 | 0.15 | 18 | 0.38 | | | | | 44 | 54.3 |
| Inventive Steel 9 | 0.35 | 0.15 | 1.3 | 70 | 27 | 0.031 | 0.025 | 0.17 | 19 | 0.15 | 0.05 | | | | 42 | 21.4 |
| Inventive Steel 10 | 0.34 | 0.2 | 1.2 | 80 | 14 | 0.03 | 0.031 | 0.15 | 15 | 0.13 | | 0.2 | | | 42 | 16.3 |
| Inventive Steel 11 | 0.35 | 0.2 | 1.4 | 71 | 25 | 0.025 | 0.023 | 0.17 | 19 | 0.15 | | | 0.2 | | 38 | 21.1 |
| Inventive Steel 12 | 0.35 | 0.21 | 1.3 | 66 | 21 | 0.023 | 0.03 | 0.18 | 18 | 0.19 | | | 0.5 | 0.3 | 55 | 28.8 |
| Inventive Steel 13 | 0.23 | 0.18 | 1.25 | 62 | 10 | 0.026 | 0.031 | 0.2 | 17 | 0.1 | | | | | 45 | 16.1 |
| Comparative Stee 16 | 0.22 | 0.25 | 0.9 | 65 | 32 | 0.033 | 0.026 | 0.15 | 17 | 0.15 | | | | | 40 | 23.1 |
| Comparative Stee 17 | 0.2 | 0.11 | 1.3 | 80 | 15 | 0.031 | 0.029 | 0.4 | 26 | 0.21 | | | | | 57 | 26.3 |
| Inventive Steel 14 | 0.4 | 0.16 | 1.3 | 78 | 9 | 0.027 | 0.029 | 0.15 | 17 | 0.18 | | | | | 38 | 23.1 |
| Inventive Steel 15 | 0.46 | 0.2 | 1.2 | 65 | 10 | 0.025 | 0.02 | 0.1 | 13 | 0.1 | | | | | 43 | 15.4 |
| Inventive Steel 16 | 0.49 | 0.15 | 1.0 | 70 | 11 | 0.029 | 0.030 | 0.18 | 19 | 0.15 | | | | | 44 | 21.4 |
| Comparative Steel 8 | 0.53 | 0.2 0 | 1.3 | 82 | 15 | 0.031 | 0.027 | 0.15 | 15 | 0.20 | | | | | 52 | 14.6 |

During hot rolling, a slab having the composition, described above, was uniformized by heating the slab in a range of 1200±30°C for 180 minutes. Then, after rough rolling, hot rolling was completed with a target of a range of 870±20°C subsequently. Then, coiling was performed at a temperature of 620°C to 690°C, and a hot-rolled steel sheet having a thickness of 3.0mm was manufactured. The hot-rolled steel sheet was pickled, to obtain a final hot-rolled steel sheet. In this case, a final thickness was 3.0mm. In the case of CR material of Comparative Steel 2 in Table 2, 50% cold rolling was performed on the hot-rolled steel sheet, and a thickness of 1.5 mm is obtained. Then, annealing was performed at a temperature of 790±10°C, and overaging was performed at 430±10°C, to obtain a final cold-rolled steel sheet. The hot-rolled steel sheet or cold-rolled steel sheet, having been obtained, was heated in a temperature range of 880°C to 960°C, and was then maintained for 5 minutes to 7 minutes. Then, rapid cooling was performed to 30°C or less at a cooling rate of 60°C/sec to 80°C/sec, higher than a martensite critical cooling rate. After the part, having been rapid cooled, was heat-treated for one hour at a tempering temperature illustrated in Table 8, the tensile properties and fatigue life were evaluated and illustrated in Table 8. For a tensile test, a tensile test specimen was manufactured according to ASTM370. For a fatigue test, an hourglass type low cycle fatigue test piece was manufactured. Moreover, in the same manner as Example 1 or Example2, the tensile test and fatigue life were evaluated.

**[Table 8]**

| Classification | Type | Thickness (mm ) | Coiling Temperatur e (°C) | Physical Properties of Material | | | Tempering Temperature (°C) | Physical Properties of Part | | | | YS× U-El (MPa%) | Low Cycle Fatigue Life (Cycle) |
|---|---|---|---|---|---|---|---|---|---|---|---|---|---|
| | | | | YS (Mpa) | TS (Mpa) | T-E 1 (%) | | YS (Mpa) | TS (Mpa) | U-El (%) | T-El (%) | | |
| Inventive Steel 4 | PO | 3.0 | 650 | 428 | 620 | 22 | 220 | 1460 | 1800 | 5.2 | 10.1 | 7592 | 6445 |
| Inventive Steel 5 | PO | 3.0 | 680 | 410 | 570 | 27 | 250 | 1270 | 1605 | 4.7 | 11.6 | 5969 | 6320 |
| Inventive Steel 6 | PO | 3.0 | 620 | 510 | 740 | 18 | 200 | 1610 | 2100 | 5.1 | 7.5 | 8211 | 6990 |
| Comparative Steel 1 | PO | 3.0 | 620 | 601 | 840 | 16 | - | | | | | | |
| Comparative Steel 2 | CR | 1.5 | 650 | 410 | 619 | 23 | 220 | 1450 | 1750 | 4.9 | 9.8 | 7105 | 5160 |
| Comparative Steel 3 | PO | 3.0 | 650 | 440 | 638 | 23 | 220 | 1444 | 1804 | 4.8 | 9.7 | 6931 | 5007 |
| Inventive Steel 7 | PO | 3.0 | 620 | 510 | 700 | 18 | 220 | 1510 | 1840 | 4.6 | 9.9 | 6946 | 6400 |
| Comparative Steel 4 | PO | 3.0 | 620 | 465 | 650 | 19 | 220 | 1500 | 1850 | 4.5 | 8.6 | 6615 | 5060 |
| Inventive Steel 8 | PO | 3.0 | 620 | 470 | 665 | 19 | 220 | 1470 | 1838 | 4.9 | 10 | 7203 | 6390 |
| Comparative Steel 5 | PO | 3.0 | 620 | 550 | 810 | 17 | - | | | | | | |
| Inventive Steel 9 | PO | 3.0 | 600 | 477 | 658 | 20 | 220 | 1490 | 1820 | 5.2 | 11 | 7748 | 6910 |
| Inventive Steel 10 | PO | 3.0 | 620 | 480 | 660 | 21 | 220 | 1480 | 1810 | 5.1 | 11 | 7548 | 6670 |
| Inventive Steel 11 | PO | 3.0 | 650 | 454 | 655 | 23 | 220 | 1445 | 1840 | 4.9 | 9.5 | 7081 | 6700 |
| Inventive Steel 12 | PO | 3.0 | 650 | 448 | 637 | 24 | 220 | 1455 | 1820 | 5.1 | 9.9 | 7421 | 6819 |
| Inventive Steel 13 | PO | 3.0 | 650 | 399 | 580 | 26 | 220 | 1290 | 1620 | 5 | 10 | 6450 | 6300 |
| Comparative Steel 6 | PO | 3.0 | 650 | 390 | 550 | 27 | 220 | 1210 | 1490 | 5.3 | 10.1 | 6413 | 6200 |
| Comparative Steel 7 | PO | 3.0 | 650 | 387 | 520 | 28 | 220 | 1168 | 1450 | 5.2 | 11.3 | 6074 | 6150 |
| Inventive Steel 14 | PO | 3.0 | 650 | 472 | 688 | 20 | 200 | 1550 | 2070 | 4.9 | 8.8 | 7595 | 7006 |
| Inventive Steel 15 | PO | 3.0 | 620 | 650 | 920 | 13 | | | | | | | |
| Inventive Steel 16 | PO | 3.0 | 690 | 565 | 781 | 18 | 210 | 1645 | 2212 | 4.0 | 9.0 | 8848 | 7110 |
| Comparative Steel 8 | PO | 3.0 | 690 | 641 | 851 | 15 | | | | | | | |

As shown in Table 8, a level of strength after tempering mainly depends on an amount of carbon, and tensile strength in a range of 1444 Mpa to 2212 Mpa is obtained. In the case of Comparative Steel 7, the content of C was low, so tempering strength of about 1450 Mpa was obtained. Thus, a level of strength was not sufficient. On the other hand, in the case of Inventive Steel 15, a composition according to the present disclosure was satisfied, but C was 0.46% and was a bit high. In this case, a coiling temperature is slightly low. Thus, it is difficult to form a steel pipe while material strength exceeds 800 MPa. In other words, tempering strength was 2100 Mpa and was excellent, but strength of a material state was a level of 920 MPa and was significant and mechanical property deviation in a width direction was also significantly high. In this case, Inventive Steel 15 is not suitable for quenching after cold forming or blanking for manufacturing a part for vehicle. As described above, the case, in which material strength exceeds a grade of 800 Mpa, was also confirmed in Comparative Steel 1, in which the content of Mn is significant, and Comparative Steel 5, in which Mo is contained in an amount of 0.38%. Moreover, an upper limit of Mn and Mo, hardenability elements, is determined based on the Example described above. However, if the content of Mn is significantly small, like Comparative Steel 6, strength after tempering heat treatment may be reduced to about 1490 MPa. In this regard, because formability should be secured during quenching after cold forming or manufacturing a steel pipe, but it is difficult to perform forming due to a reduction in elongation, when tensile strength exceeds 800 Mpa, in general. However, in the case of Comparative Steel 8, the content of C satisfies the range defined by the claim according to the present disclosure, but is slightly high. In this case, a method, in which a coiling temperature is controlled to be slightly high in order to reduce tensile strength of a material, may be used for forming. To confirm this, in the case of Inventive Steel 16, which has a composition similar to that of Comparative Steel 8, and in which the content of C is 0.49% and is a bit high, a hot-rolled steel sheet is manufactured after coiling at temperature of 690°C and pickling, tensile strength of the steel sheet, having been obtained, was analyzed. As a result, the tensile strength was 781 MPa, a value suitable for cold forming. However, in the case of Comparative Steel 8, in which the content of C is further increased and is 0.53%, even though a hot-rolled steel sheet is manufactured by performing coiling at 690°C in a similar manner as Inventive Steel 16, tensile strength of the steel sheet is 851 MPa, unsuitable for forming. Thus, it is confirmed that the content of C suitable in the present disclosure is 0.50% or less.

Meanwhile, in the present disclosure, P segregation, concentrated in a grain boundary during solution heat treatment of austenite, may reduce the fatigue life and may also reduce impact energy, so it may be problematic. Thus, it is required to control the content of P in steel to be low. Moreover, it is also effective to add Mo to allow a degree of P concentration in a grain boundary to be lowered. Therefore, it is required to control a ratio of Mo/P. In the case of Comparative Steel 3 and Comparative Steel 4, the content of P is high, so a ratio of Mo/P is less than 10. Moreover, in the case of Comparative Steel 2, an amount of Mo added is also low, so a ratio of Mo/P is also less than 10. When three cases described above are compared with Inventive Steel 4, Inventive Steel 7, Inventive Steel 8, and Inventive Steel 9 to 14, having the similar content of carbon, it was confirmed that the yield strength×uniform elongation balance is low and the fatigue life has also a low degree.

In the case of Comparative Steel 4, Inventive Steel 8, Comparative Steel 5, and Inventive Steel 11, the tensile properties and fatigue life are evaluated with respect to compositions, to which Nb, V, Cu, and Cu-Ni are added, respectively. In this case, when low temperature tempering is performed, it is confirmed that good fatigue properties may be obtained.

While exemplary embodiments have been shown and described above, it will be apparent to those skilled in the art that modifications and variations could be made without departing from the scope of the present invention as defined by the appended claims.

## Claims

1. A part for vehicle, comprising a composition including, by weight ratio, 0.20% to 0.50% of carbon (C), 0.5% or less of silicon (Si), 1.0% to 2.0% of manganese (Mn), 0.01% to 0.1% of aluminum (Al), 0.010% or less of phosphorus (P), 0.003% or less of sulfur (S), 0.01% to 0.1% of titanium (Ti), 0.05% to 0.5% of chromium (Cr), 0.05% to 0.3% of molybdenum (Mo), 0.01% or less of nitrogen (N), and a remainder of iron (Fe) and other inevitable impurities, and
comprising a microstructure including, by an area ratio, 90% or more of tempered martensite, 4% or less of retained austenite, and a remainder of one or both of two selected from among ferrite and bainite,
wherein epsilon carbide is contained in the tempered martensite as a precipitate.

2. The part for vehicle of claim 1, wherein the composition further includes, by weight ratio, 0.0005% to 0.005% of boron (B).

3. The part for vehicle of claim 1, wherein the composition further includes, by weight ratio, one or both of two selected from among 0.05% to 0.5% of copper (Cu) and 0.05% to 0.5% of nickel (Ni).

4. The part for vehicle of claim 1, wherein the composition further includes, by weight ratio, one or both of two selected from among 0.01% to 0.07% of niobium (Nb) and 0.05% to 0.3% of vanadium (V).

5. The part for vehicle of claim 1, wherein the composition satisfies the relationship of Mo/P>10, where each of Mo and P indicates the content (weight%) of the corresponding element.

6. The part for vehicle of any one of claims 1 to 5, wherein the epsilon carbide exists in a numerical ratio of 70% or more to a total precipitate in the tempered martensite.

7. The part for vehicle of any one of claims 1 to 5, wherein strength is 1500 MPa or more.

8. The part for vehicle of any one of claims 1 to 4, wherein a yield ratio is 0.7 to 0.85.

9. A method for manufacturing a part for vehicle, comprising:
preparing a material having a composition including, by weight ratio, 0.20% to 0.50% of C, 0.5% or less of Si, 1.0% to 2.0% of Mn, 0.01% to 0.1% of Al, 0.010% or less of P, 0.003% or less of S, 0.01% to 0.1% of Ti, 0.05% to 0.5% of Cr, 0.05% to 0.3% of Mo, 0.01% or less of N, and a remainder of Fe and other inevitable impurities;
heating the material to a temperature at which the material is transformed into austenite;
obtaining an intermediate product by cooling while forming the material having been heated in a mold; and
tempering the intermediate product at a temperature of 150°C to 250°C.

10. A method for manufacturing a part for vehicle, comprising:
preparing a material having a composition including, by weight ratio, 0.20% to 0.50% of C, 0.5% or less of Si, 1.0% to 2.0% of Mn, 0.01% to 0.1% of Al, 0.010% or less of P, 0.003% or less of S, 0.01% to 0.1% of Ti, 0.05% to 0.5% of Cr, 0.05% to 0.3% of Mo, 0.01% or less of N, and a remainder of Fe and other inevitable impurities;
cold forming the material;
heating the material having been cold formed to a temperature at which the material is transformed into austenite;
obtaining an intermediate product by cooling the material having been heated; and
tempering the intermediate product at a temperature of 150°C to 250°C.

11. The method for manufacturing a part for vehicle of claim 9 or claim 10, wherein the composition further includes, by weight ratio, 0.0005% to 0.005% of B.

12. The method for manufacturing a part for vehicle of claim 9 or claim 10, wherein the composition further includes, by weight ratio, one or both of two selected from among 0.05% to 0.5% of Cu and 0.05% to 0.5% of Ni.

13. The method for manufacturing a part for vehicle of claim 9 or claim 10, wherein the composition further includes, by weight ratio, one or both of two selected from among 0.01% to 0.07% of Nb and 0.05% to 0.3% of V.

14. The method for manufacturing a part for vehicle of claim 9 or claim 10, wherein the composition satisfies the relationship of Mo/P>10,
where each of Mo and P indicates the content (weight%) of the corresponding element.

15. The method for manufacturing a part for vehicle of claim 9 or claim 10, wherein the intermediate product has a microstructure including, by an area ratio, 90% or more of martensite, 4% or less of retained austenite, and a remainder of one or both of two selected from among of ferrite and bainite.

16. The method for manufacturing a part for vehicle of claim 9 or claim 10, wherein the temperature at which the material is transformed into austenite is 850°C to 960°C.

17. The method for manufacturing a part for vehicle of claim 9 or claim 10, wherein the time for holding at the temperature at which the material is transformed into austenite is 100 seconds to 1000 seconds.

18. The method for manufacturing a part for vehicle of claim 9 or claim 10, wherein a cooling rate in the obtaining an intermediate product by cooling is equal to or higher than a martensite critical cooling rate.

19. The method for manufacturing a part for vehicle of claim 18, wherein a cooling stop temperature in the obtaining an intermediate product by cooling is equal to or lower than 100°C.

20. The method for manufacturing a part for vehicle of claim 9 or claim 10, wherein the holding time in the tempering is equal to 10 minutes or more.
